# EUROPEAN PATENT SPECIFICATION

(11) **EP 3 459 143 B1**
(45) Date of publication and mention of the grant of the patent: **20.07.2022**
(21) Application number: 17732530.5
(22) Date of filing: 16.05.2017
(51) Int. Cl.: H01R 13/58, H01R 25/00, H01R 24/54, H01R 9/22, H01R 13/50, H01R 13/447, H01R 13/52

(54) **CABLE GRIP FOR HOUSING SYSTEM FOR ELECTRICAL CONNECTORS**
KABELZUGENTLASTUNG FÜR GEHÄUSE-SYSTEM FÜR ELEKTRISCHE VERBINDER
SERRE-CÂBLE POUR SYSTÈME DE LOGEMENT DE CONNECTEURS ÉLECTRIQUES

(30) Priority: 18.05.2016 GB 201608712; 06.12.2016 GB 201620734
(43) Date of publication of application: 27.03.2019
(73) Proprietor: Electro Expo Limited, Hertford, Hertfordshire, SG13 7AP (GB)
(72) Inventor: MOULE, Peter, Hertford Hertfordshire SG13 7AP (GB)
(74) Representative: Fry, David John
(86) International application number: PCT/GB2017/000077
(87) International publication number: WO 2017/198985

(56) References cited:
- EP-A2- 1 798 821
- WO-A1-96/08855
- NL-A- 7 302 186

## Description

### Field of the Invention

This invention relates to a housing system for an electrical connector, particularly though not exclusively for use in temporary installations such as exhibition displays.

### Background of the Invention

Electrical connectors are used, for example, to connect electrical conductors to one another for operative use.

GB 2260864 shows an example electrical connector which comprises a box housing with a lid, in which a strip-like electrical terminal assembly is fixed within the housing in a push-fit manner. A similar electrical connector is available under the name CHOC BOX (RTM). The housing prevents deliberate and accidental contact with potentially unshielded conductors, for example.

Typically, individual conductors are covered by an insulative sheath, and multiple sheathed conductors are often arranged side-by-side within an insulative jacket. To prevent conductors from being accidentally removed from their connection, e.g. by snagging or pulling, a clamping system may be employed to clamp the conductors to the housing. Known clamping systems usually employ a plastic strip with two screws extending through the body of the housing and into the ends of the strip; the insulated conductors are then fed under the strip so that tightening of the screws pulls the strip downwards to clamp the conductors in place. This, however, can be cumbersome and time-consuming.

Other examples of electrical connector boxes with clamping mechanisms are disclosed in EP1798821, WO 96/08855 and NL 7302186.

### Summary of the Invention

A housing system for an electrical connector according to the invention is disclosed in independent claim 1. Other aspects of the invention are disclosed in the dependent claims.

### Brief Description of the Drawings

The invention will now be described, by way of non-limiting example, with reference to the accompanying drawings, in which:
Figure 1 is a perspective view of a terminal assembly which may form part of an electrical connector system;
Figure 2 is a perspective view of a box-like chamber forming part of a housing system according to the invention;
Figure 3 is a top plan view of the Figure 2 chamber;
Figure 4 is a perspective view of a clamping system for use with the Figure 2 chamber;
Figure 5 is a front view of the Figure 4 clamping system;
Figure 6 is a further front view of the Figure 4 clamping system when deformed to secure a cable;
Figure 7 is a perspective view of the Figure 2 chamber with two clamping systems being inserted;
Figure 8 is a side view showing one clamping system located within the chamber;
Figure 9 is a partial side view of an alternative form of clamping system;
Figure 10 is a perspective of from a first side of a box-like chamber constructed in accordance with a further embodiment of the invention;
Figure 11 is a perspective view from the other side of Figure 10;
Figure 12 is a perspective view of the cable grip detail of figures 10 and 11;
Figure 13 is a perspective view of the clip detail of a further embodiment;
Figure 14 is an end cross section view taken through A-A of Figure 15A;
Figures 15-D are plan views various sets of connectors fitted within the chamber;
Figure 16 is a perspective of a box-like chamber constructed in accordance with a further embodiment of the invention with the lid open;
Figure 17 is a perspective view of the chamber of figure 16 with the lid partially open;
Figure 18 is a perspective view of the underside of the chamber of figure 16 with the lid closed;
Figures 19 and 20 are perspective views of the chamber of figure 17 showing the location of the electrical connectors;
Figure 21 is an enlarged perspective view of the cable grip used for the chamber of figure 16;
Figure 22 is an enlarged plan view from above view of the cable grip when located within the chamber;
Figures 23A and B are side perspective views of the chamber of figure 16 when closed; and
Figure 24 is a side sectional view of the chamber of figure 16 showing the opening mechanism.

### Detailed Description of Preferred Embodiments

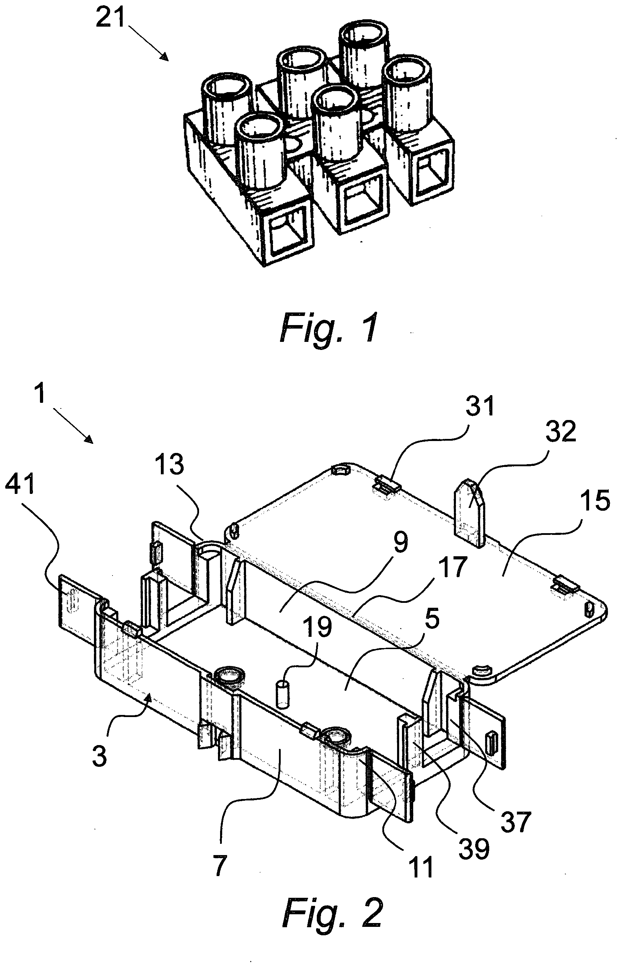

Embodiments herein relate to a housing system for an electrical connector. A known electrical connector is shown in Figure 1, and referred to hereafter as terminal assembly 21. The terminal assembly 21 is described in greater detail in GB 2260864, the contents of which are incorporated herein by reference.

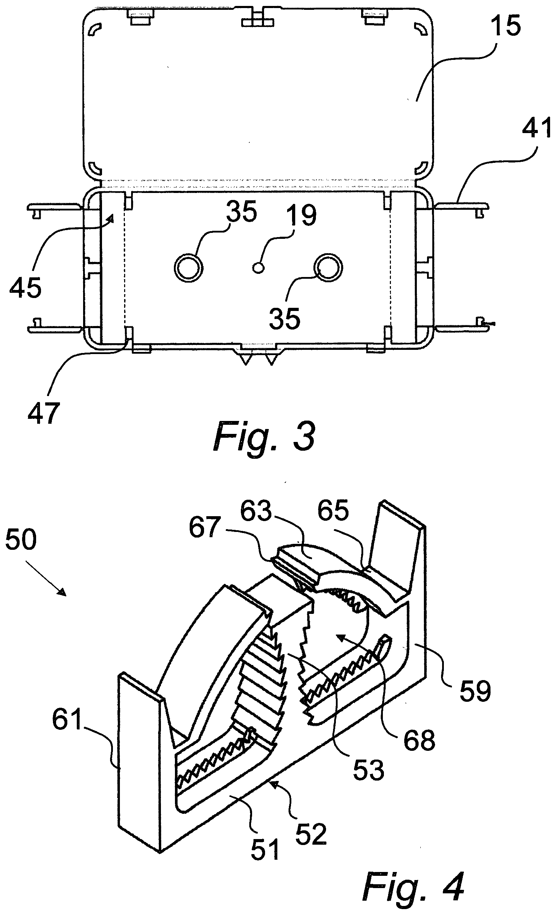

Referring to Figures 2 and 3, one part of a housing system comprises a box-like chamber 1 having a body 3, a base wall 5, opposite and lengthwise side walls 7 and 9, widthwise walls 11 and 13 and an open top which can be closed by a substantially rectangular lid 15. In the embodiment illustrated, the body 3 and lid 15 are moulded integrally from a suitable plastics material, for example polypropylene, and are pivotally connected along the free edge of the side wall 9 and the adjoining longer edge of the lid 15 by an integral flexible hinge 17.

Upstanding from the base wall 5 is at least one integral peg 19 sized so as to locate within a corresponding bore in the Figure 1 terminal assembly 21 using an interference fit. Plural such pegs 19 may be provided, spaced apart to correspond to plural bores in the terminal assembly 21 if appropriate. For ease of fitting the terminal assembly 21 to the peg 19, the peg may be tapered towards its free end, but this is not essential.

At spaced apart locations along the free longer edge of the lid 15 are provided apertures or recesses 31, set-in slightly from the free edge, and at corresponding locations on the free edge of the wall 7 of the body 3 are provided catch formations 33, arranged, when the lid is closed, to enter the respective aperture or recess 31. The lid 15 is held shut by the catch formations 33 in this way and can be opened from the body 3 by user force in the opposite direction. A tongue 32 is provided, upstanding from near the free edge of the lid 15 which is received in a corresponding aperture or slot provided on the wall 7 to help retain the lid closed.

In some embodiments, the peg 19 can be located on the underside of the lid 15, or a peg can be located on both the base wall 5 and the lid to permit attachment of the terminal assembly 21 in alternative locations.

The base wall 5 of the chamber 1 is provided with holes 35 or regions of reduced thickness which can readily be penetrated to form holes, such holes in either case being adapted to receive fasteners, such as screws, whereby the chamber 1 may be secured by its base 5 to a wall or other flat supporting surface.

Within the end walls 11, 13 are formed recesses or apertures 37 for the passage of electrical cables in use for connecting to the terminal assembly 21. In the shown embodiment, two such recesses 37 are provided at each end, either side of a central, upstanding post 39. Each recess 37 can be selectively closed by respective doors 41 which attach towards the ends of respective end walls 11, 13 by means of a flexible hinge, and open in opposite orientations as shown. The free ends of each door 41 close against the upstanding post 39 and are retained using respective catch formations similar to that of the lid 15. Where only a subset of the recesses 37 are to be used, the doors 41 prevent ingress of particles or other problematic material.

First and second retaining areas 45 are provided inside the chamber 1, respectively adjacent end walls 11, 13. Each is defined by a pair of ribs 47 which extend inwards by a relatively short amount from side walls 7, 13. The space between each pair of ribs 47 and the adjacent wall 11, 13 defines a slot for receiving a clamping system 50.

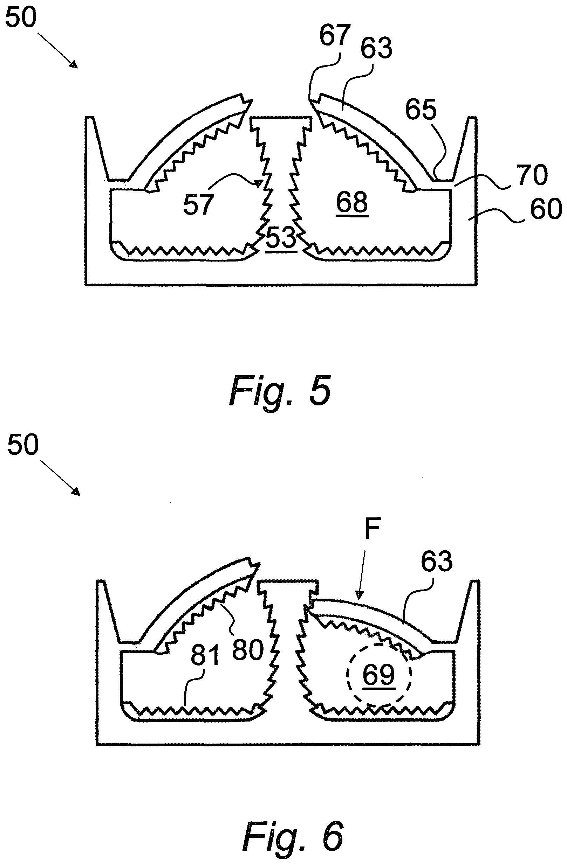

Referring now to Figures 4 and 5, the housing system further comprises one or more clamping systems 50 for securing cables which in use enter chamber 1 through one or more of the recesses 37. The clamping system 50 is provided as a removable and replaceable insert.

The clamping system 50 comprises a longitudinal base member 51 integrally formed with a first upstanding member 53, centrally located, and a pair of second upstanding members 59 and 61 at respective opposite ends.

The underside 52 of base member 51 is substantially planar and has a length substantially the same as the distance between the side walls 7, 9 of the chamber 1 so that the clamping system 50 locates between said walls with a relatively close fit. The depth of the base member 51 is substantially the same as that of the slots 45 so that the clamping system 50 can be received and retained at one end of the chamber 1.

The first member 53 is a post-like structure having first and second lateral sides, arcuate in profile as shown, each carrying a set of ratchet teeth 57 extending along the arc. Each of the teeth 57 is asymmetrical in profile.

Each second member 59, 61 comprises a first section 60 which extends substantially vertical, of a length no greater than the height of the walls 7 and 9 of chamber 1. A second section 63 extends from the first section 60, from a point 70 part-way along its length, via a flexible section 65. The second section 63 is arcuate in profile as shown. At or near the free-end of said second section 63 is a pawl 67, being an element having an asymmetric profile with a tapering underside and a flat upper side.

A space, or recess 68 is defined between the first and second members 53 and 59, 61, and also the base member 51, for the passage of cables in use.

As shown in Figure 6, the arrangement of the first and second members 53, and 59, 61 is such that that the second member, primarily its arcuate section 63, can be moved by user force F about flexible section 65 towards the base member 51. The pawl 67 will travel through an arc generally corresponding to the profile of the ratchet teeth. This reduces the cross-sectional area of recess 68 and therefore secures an inserted cable 69 in position.

As will become clear later on, outwards lateral movement of portion 60 is prevented in operative use by the walls 7, 9 of the chamber 1 which keeps the pawl 67 in engagement with successive ones of the teeth 57 during downwards travel. Movement is therefore permitted in one direction only to maintain securement.

Optional gripping surfaces 80 and 81 can be provided to reduce or prevent lateral movement of an inserted cable 69.

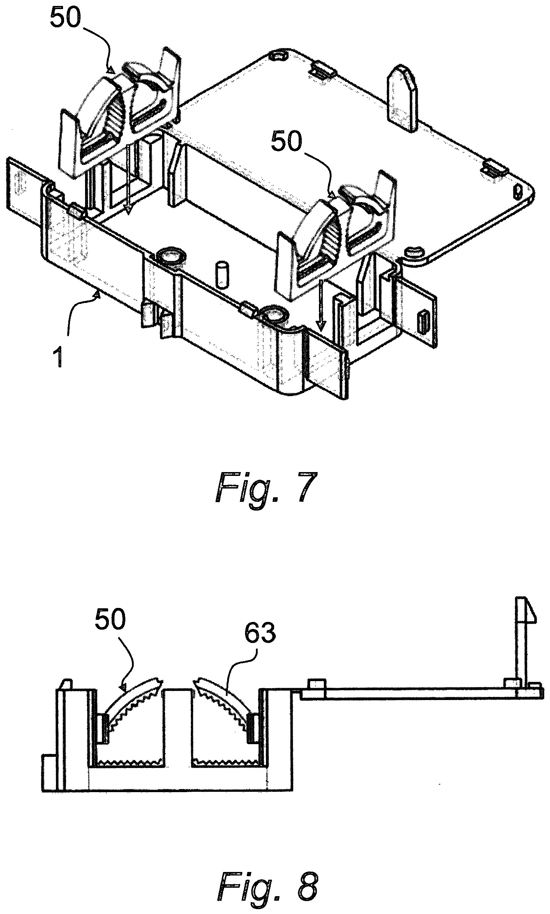

To complete the housing system, one or two such clamping systems 50 are inserted within the retaining slots 45 of chamber 1. Referring to Figure 7, two such clamping systems 50 are shown prior to insertion. The relative dimensions of the clamping systems 50 and the slots 45 are such that the clamping systems are retained with a relatively tight fit, in particular between the walls 7, 9 of the chamber 1. The underside 52 may rest on the base wall 5.

Figure 8 shows a side view of the chamber 1 with one clamping system 50 in operative position. In use, a cable is inserted through a chamber recess 37 and a corresponding recess 68 of the clamping system 50, and then connected in the conventional manner to the terminal assembly 21 shown in Figure 1. Next, the cable is secured by moving the arcuate section 63 towards the base 5 of the chamber 1 in the manner described above with reference to Figure 6. The side walls 7, 9 prevent outwards lateral movement of the portions 60 so that reverse travel of the pawl 67 is prevented.

As will be appreciated, each clamping system 50 provides in this case two separate and independently-operated clamping portions. Therefore, the above clamping process can be repeated for the other portion, if needed, and also for the other clamping system 50 at the opposite end of the chamber 1, again if needed.

To remove the cable(s) from the clamping system 50, it is simply moved upwardly and out of the space between the side walls 7, 9. In this, withdrawn position, the or each portion 60 can be manually moved away from the first portion 53 to permit the pawl 67 to disengage the set of teeth 57 and travel in the reverse direction to open the corresponding recess 68. Free ends 73 of the second portions 60 permit the user to disengage the pawl 67 conveniently.

In some embodiments, the clamping system 50 is formed such that upright portions 60 are slightly off-vertical, that is, they extend outwardly so that a small compressional force is applied by the side walls 7, 9 when inside the chamber 1. When withdrawn, the portions will spring back to the original configuration and disengagement is automatic.

Each clamping system 50 may be formed integrally of a moulded plastics material.

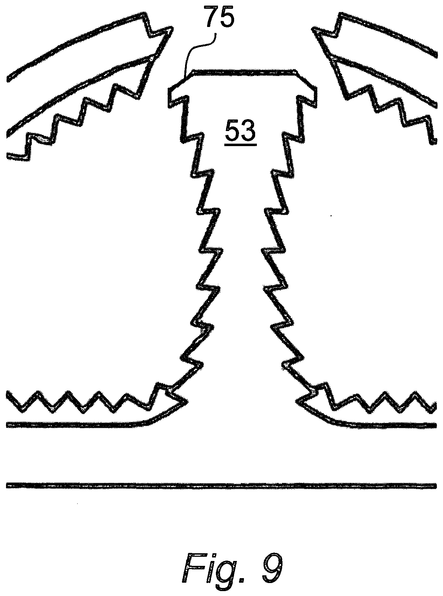

Referring to Figure 9, in some embodiments, chamfered surfaces 83 may be provided on one or more top edges of the first portion 53 to permit the pawl 67 to ride over the corner region more easily.

In some embodiments, the clamping system 50 may be arranged such that the pawl 67 already engages the set of teeth 57, near the upper end, prior to insertion within the chamber 1.

The lid 15 can be connected over the body 3 to close-off the housing system.

The housing system described above may be provided with or without a terminal assembly 21. When provided with a terminal assembly 21, it provides a complete electrical connector, and the terminal assembly can be detachable or already fixed in relation to the body 3. In provided without, the user can simply provide their own terminal assembly for location between the two chamber ends. The housing system described offers improvements, including a more convenient and quick way of securing cables relative to the housing body 3.

The term "pawl' in the context of this disclosure is intended to mean any means for engaging one of a series or rack of teeth forming part of a ratchet mechanism. The end of the second member (without any additional protrusion) for example could be referred to as a pawl.

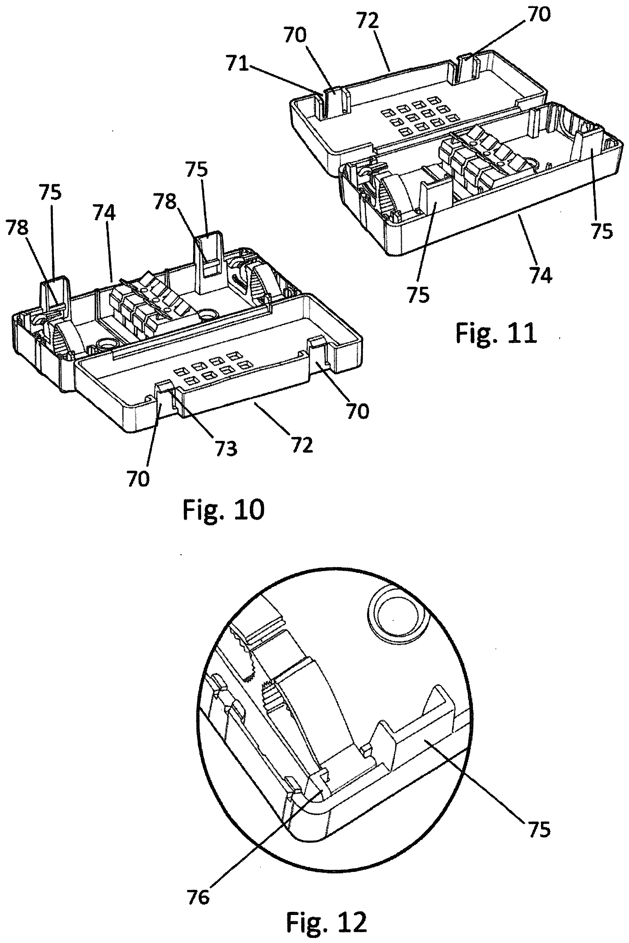

Figures 10 to 15 illustrate a further embodiment of the invention. Much of the detail is the same as for the embodiment described above. Only the differences will now be described.

Figures 10 and 11 are perspective views taken from each side. The main difference is the clipping mechanism that clips the two halves together. Two spaced apart clips 70 are formed in recesses 71 within the side wall of the lid 72. Each clip upstands between the side walls of the recess 71 and ends in a return hook or pawl 73.

The base 74 part of the chamber has two complimentary shield extensions 75 extending upwardly from its side edge. As can be seen best in figure 12, the shield extensions 75 are U-shaped (the arms of the U extending into the chamber) for strength and to prevent deflection of the shield when the chamber is opened.

As also can be seen from figure 12, the cable grip mould 76 and the shield extension 75 intersect to reduce the material required.

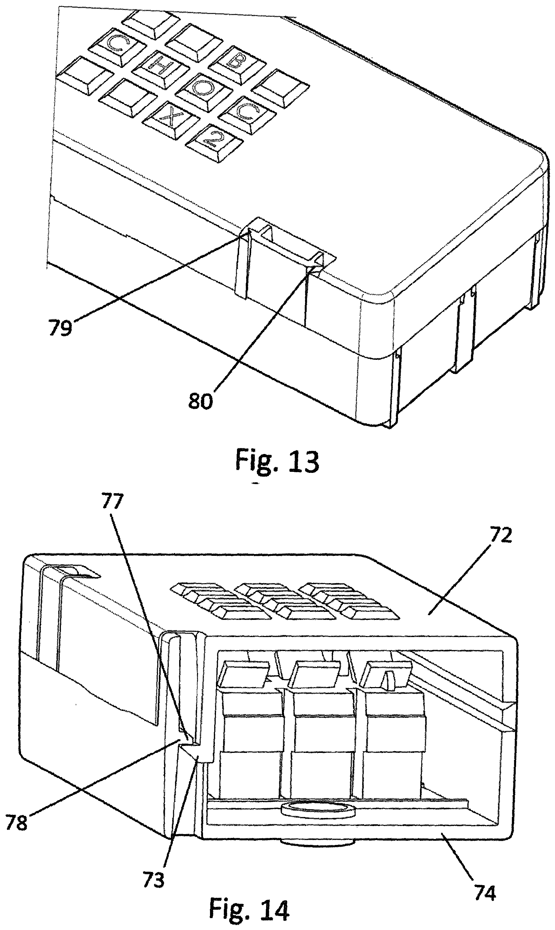

As can be seen best in figure 14, the return hook 73 of each clip 70 has a abutment surface 77 on its underside which abuts against a bottom surface of an elongate protrusion 78 which extends laterally across the shield extension 75 between the arms. The protrusion 78 extends across the shield 75 approximately at its center height.

When the abutment surface 77 of the hook 73 abuts against the underside surface of the protrusion 78 the lid 72 is locked shut against the base 74.

In the embodiment shown in figures 13, chamfered edges 79 are provided on the side walls of the clip recess 71 which interact with chamfered walls 80 of the sides of the shield extension 75 to prevent the shield 75 from bending when the lid is opened.

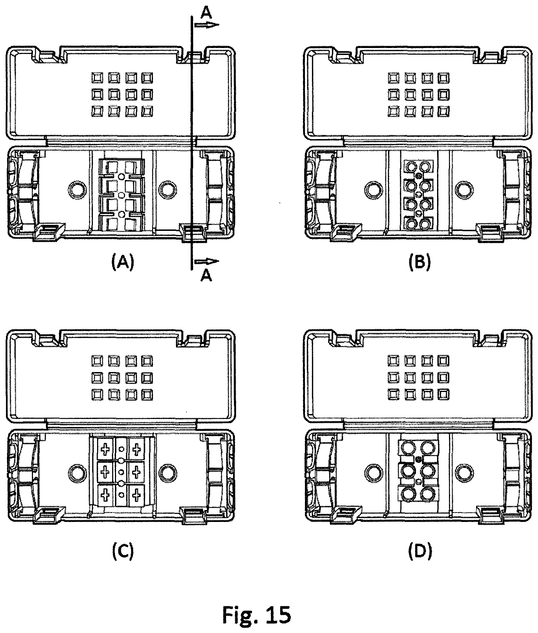

Figures 15A-D illustrate the chamber with various sets of connectors inserted for use with electrical cables.

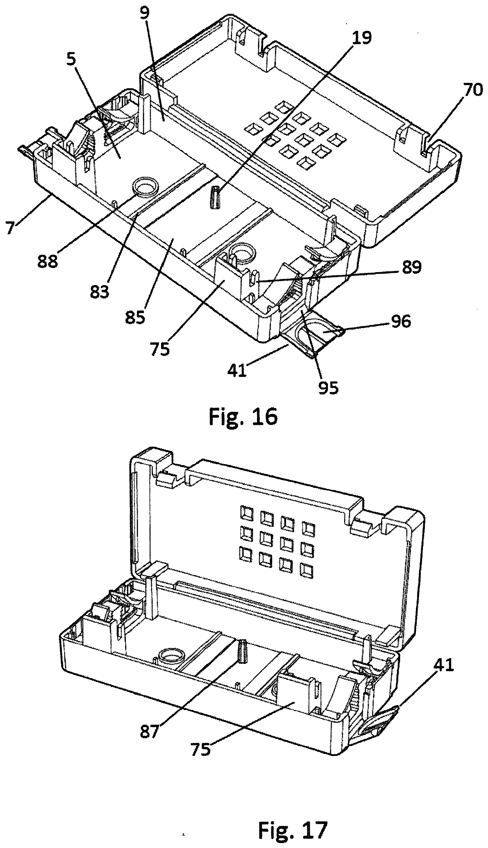

Figures 16 to 24 illustrate a further embodiment of the invention. Where appropriate the same numerals have been used for features already described in previous embodiments. It will be appreciated that individual features described in relation to a specific embodiment may be equally incorporated into the other embodiments in such a way that individual features should not be limited to the specific embodiment in relation to which they are described.

The base wall 5 of the embodiment of figure 16 includes raised linear projections 83 extending laterally across the base wall 5 between the side walls 7, 9. A recess 85 is provided in the floor of the base 5 between the linear projections 83. The projections 83 and the recessed floor 85 assist the location of electrical connectors within the chamber 1 during use.

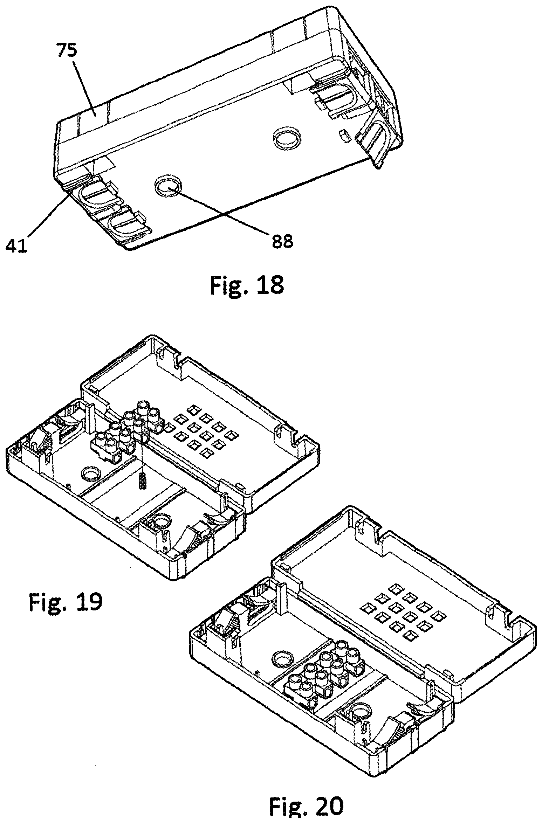

The peg 19 is formed with longitudinal flanges 87 on to which the connector, or a frame therefore, is pushed to anchor the connector in place. This can be seen best in figures 19 and 20.

The base has two circular recesses 88 providing areas of the floor with less thickness. The recesses provided locations through which a screw can be threaded to secure the box 1 against an outside surface for use.

The shield extensions 75 have U-shaped side walls 89 that extend into the housing thereby to define chamber 91 in which to receive the clips 70 of the lid 15 when the box 1 is shut.

The clips 70 of the lid 15 extend from an inner wall of a U-shaped recess 93 formed in the side wall of the lid 15 for strength. The shape of the walled recess 93 is complimentary to the shape of the chamber 91 to enable the lid to be closed in flush and secure manner.

The doors 41 formed in the side walls 11, 13 of the base 5 open downwardly through a living hinge mechanism 95 in the bottom edge of the side wall. As can be seen in Figures 17 and 18, the doors 41 are able to pivot 270° such that doors 41 are able to rest against undersurface of the base 5 when fully open so not to cause an obstruction. Clips (not shown) are be provided on the undersurface of the base to hold the doors 41 against the base 5.

The doors include regions of reduced thickness 96 which provide locations for screws to be threaded to secure the door flat against an outside surface if alternatively required. This provides a way of securing the outside of the box 1 in a desired location and avoids the need to provide securement means within the main chamber itself.

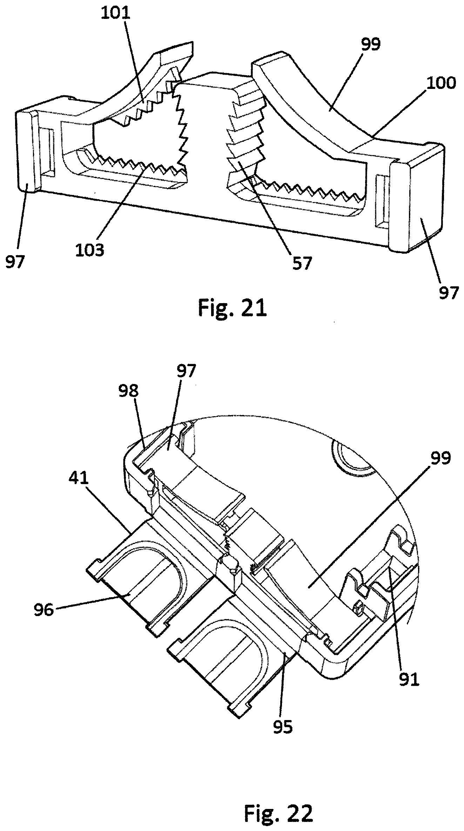

Referring now to figures 21 and 22, the clamping system or cable grip 50 is of similar design to that previously described in other embodiments. There are though some differences.

The upstanding ends 97 (referred to previously as "first sections 59, 61") are T-shaped to be received in correspondingly shaped walled-recesses 98 in the side walls 7, 9 of the base 5. This is best illustrated in figure 21.

The clamping arms 99 (previously referred to as "second members 63") have an arcuate profile but in this embodiment arch in an upward direction. The arms 99 flex downwardly about a living hinge 100 such that the end of one or each arm 99 engages with the ratchet teeth 57 of the first member 53. Due to the upward arcuate orientation of the arm 99, a separate projection or pawl is not necessarily required at its end.

The underside of each clamping arm 99 is provided with teeth 101 to grip a cable in place during use between the teeth 101 of each clamping arm 99 and teeth 103 formed in the floor of the cable grip 50 between the first member 53 and each end 97.

The stepped grip arrangement of the ratchet teeth 57 on each side of first member 52 allows varying sizes of cables to be clamped.

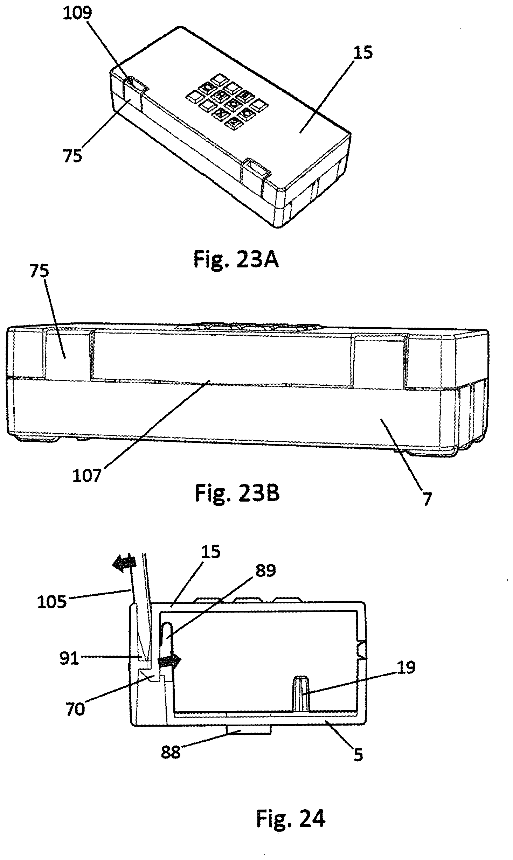

Referring now to figures 23A and 23B, when closed each shield extension 75 forms a front barrier to the clip recess 91 to prevent easy access to the clip 70. This prevents the box 1 from being opened easily without the use of an appropriate opening tool 105.

A small lip of material 107 on the lid 15 acts like a spring to assist opening of the box 1 once the clips 70 have been released using the tool 105.

Figure 24 shows the how the opening tool 105 is used to open the box 1. The tool 105 takes the form of an elongate pen-like structure which is of sufficient width to be received within the gap 109 formed between each shield extension 75 the side wall of the lid 15 and into the chamber 91. The tool 105 could be, or take the form of, a screwdriver for example. The gap is sufficiently narrow such that a finger cannot extend into the gap and only the tool 105 can be used. Once inserted, the tool 105 is manipulated to push the clip 70 inwardly to disengage its clip 70 from the recess 91 and open the lid 15.

## Claims

1. A housing system for an electrical connector, comprising:
a chamber (1) including a base wall (5) and two substantially opposite and upstanding side walls (7, 9); and
at least one cable clamping system (50), the at least one clamping system (50) being arranged to selectively operate in first and second positions, the or each clamping system (50) comprising first and second members (53, 59, 61) arranged to define an aperture (68) or recess through which at least one cable can pass, the first member carrying a set of ratchet teeth (57) and the second member having an engagement surface (67) for engagement with the ratchet teeth (57),
wherein in the first position the second member (59, 61) can be moved in relation to the first member (53) so that the engagement surface (67) can engage successive ones of the teeth (57) in only one direction to reduce the size of the aperture (68) or recess, and wherein in the second position the second member (59, 61) is permitted to move in the reverse direction to allow opening of the aperture (68) or recess
wherein the or each clamping system (50) is insertable into the housing between the two side walls (7, 9) at which time the first and second members (53, 59, 61) are prevented from being moved apart by the side walls (7, 9); and the or each clamping system (50) is removable from the chamber (1) at which time said first and second members (53, 59, 61) can be moved apart;
**characterised in that** the first member (53) of the or each clamping system (50) carries a set of ratchet teeth (57) on opposite sides, and wherein a second member (59, 61) is provided on each side of the first member (53) to define two cable recesses which in use can be reduced in size independently of one another.

2. The housing system according to claim 1, wherein the at least one clamping system comprises a base member (51) between the first and second members, the first member being upstanding from said base member and carrying the set of ratchet teeth on a side wall thereof, and the second member being spaced from the first member along the base member and extending upwardly and over the base member towards the first member.

3. The housing system of claim 2, wherein the second member comprises an upright portion (60) which in use abuts a side wall of the chamber, and an inwards portion (70) that extends from the upright portion inwardly over the base member and towards the first member.

4. The housing system of claim 3, wherein the inwards portion is connected to the upright portion by a flexible part (65).

5. The housing system of any preceding claim, wherein the at least one clamping system is formed of a one-piece moulding.

6. The housing system of any preceding claim, wherein separate first and second such clamping systems are provided for placement within the chamber, either side of a terminal assembly, or a mounting therefor, and adjacent respective openings provided for cable entry.

7. The housing system of any preceding claim, wherein the chamber comprises at least one locating means (45) for retaining using a friction fit the at least one clamping system within the chamber adjacent opening(s) provided for cable entry between upstanding side walls of the chamber.

8. The housing system of claim 7, wherein the or each locating means comprises a pair of opposed ribs (47) on respective side walls of the chamber defining a space for receiving the or each clamping system.

9. The housing system of any preceding claim, further comprising means for detachably securing an electrical terminal assembly (21) within the chamber.

10. The housing system of claim 9, wherein the securing means comprises a peg (19) upstanding from a base wall (5) of the chamber for engaging a complementary aperture or recess in an electrical terminal assembly in a push-fit manner.

11. The housing system of any preceding claim, wherein the chamber has a pair of end walls each having at least one aperture through which a cable or cables can pass, and having one or more doors (41) provided at the end walls to permit selective opening and closing of the end wall apertures (37) .

12. The housing system of any preceding claim, further comprising a lid (72) for enclosing the clamping system within the chamber.

13. An electrical connector comprising the housing system of any preceding claim, and an electrical terminal assembly mounted within the chamber.

## Patentansprüche

1. Gehäusesystem für einen elektrischen Verbinder, umfassend:
eine Kammer (1), die eine Basiswand (5) und zwei im Wesentlichen gegenüberliegende und aufrechte Seitenwände (7, 9) enthält; und
mindestens ein Kabelklemmsystem (50), wobei das mindestens eine Klemmsystem (50) so angeordnet ist, dass es selektiv in einer ersten und einer zweiten Position arbeitet, wobei das oder jedes Klemmsystem (50) ein erstes und ein zweites Element (53, 59, 61) umfasst, die so angeordnet sind, dass sie ein Loch (68) oder eine Aussparung definieren, durch die mindestens ein Kabel hindurchgehen kann, wobei das erste Element einen Satz Rastzähne (57) trägt und das zweite Element eine Eingriffsfläche (67) zum Eingriff mit den Rastzähnen (57) aufweist, wobei in der ersten Position das zweite Element (59, 61) in Bezug auf das erste Element (53) bewegt werden kann, so dass die Eingriffsfläche (67) aufeinanderfolgende der Zähne (57) in nur einer Richtung in Eingriff nehmen kann, um die Größe des Lochs (68) oder der Aussparung zu verringern, und wobei es dem zweiten Element (59, 61) in der zweiten Position ermöglicht ist, sich in der umgekehrten Richtung zu bewegen, um ein Öffnen des Lochs (68) oder der Aussparung zu erlauben,
wobei das oder jedes Klemmsystem (50) in das Gehäuse zwischen den zwei Seitenwänden (7, 9) einsetzbar ist, zu welchem Zeitpunkt das erste und das zweite Elemente (53, 59, 61) durch die Seitenwände (7, 9) daran gehindert werden, voneinander weg bewegt zu werden;
und das oder jedes Klemmsystem (50) von der Kammer (1) entfernbar ist, zu welchem Zeitpunkt das erste und das zweite Element (53, 59, 61) voneinander weg bewegt werden können;
**dadurch gekennzeichnet, dass** das erste Element (53) des oder jedes Klemmsystems (50) einen Satz Rastzähne (57) auf gegenüberliegenden Seiten trägt, und wobei ein zweites Element (59, 61) auf jeder Seite des ersten Elements (53) bereitgestellt ist, um zwei Kabelaussparungen zu definieren, die im Gebrauch in Größe unabhängig voneinander verkleinert werden können.

2. Gehäusesystem nach Anspruch 1, wobei das mindestens eine Klemmsystem ein Basiselement (51) zwischen dem ersten und dem zweiten Element umfasst, wobei das erste Element von dem Basiselement aufrecht steht und den Satz Sperrzähne an einer Seitenwand davon trägt und wobei das zweite Element von dem ersten Element entlang des Basiselements beabstandet ist und sich nach oben und über das Basiselement in Richtung des ersten Elements erstreckt.

3. Gehäusesystem nach Anspruch 2, wobei das zweite Element einen aufrechten Abschnitt (60), der im Gebrauch an einer Seitenwand der Kammer anliegt, und einen inneren Abschnitt (70) umfasst, der sich von dem aufrechten Abschnitt nach innen über das Basiselement und in Richtung des ersten Elements erstreckt.

4. Gehäusesystem nach Anspruch 3, wobei der innere Abschnitt mit dem aufrechten Abschnitt durch ein flexibles Teil (65) verbunden ist.

5. Gehäusesystem nach einem vorhergehenden Anspruch, wobei das mindestens eine Klemmsystem aus einem einstückigen Formteil gebildet ist.

6. Gehäusesystem nach einem vorhergehenden Anspruch, wobei ein erstes und ein zweites solches Klemmsystem, die getrennt sind, zur Anordnung innerhalb der Kammer auf jeder Seite einer Anschlussbaugruppe oder einer Halterung dafür und angrenzend an jeweilige Öffnungen, die für den Kabeleingang bereitgestellt sind, bereitgestellt sind.

7. Gehäusesystem nach einem vorhergehenden Anspruch, wobei die Kammer mindestens ein Positionierungsmittel (45) zum Festhalten des mindestens einen Klemmsystems innerhalb der Kammer unter Verwendung eines Reibsitzes angrenzend an (eine) Öffnung(en) umfasst, die für den Kabeleintritt zwischen aufrechten Seitenwänden der Kammer bereitgestellt ist/sind.

8. Gehäusesystem nach Anspruch 7, wobei das oder jedes Positionierungsmittel ein Paar einander gegenüberliegender Rippen (47) an jeweiligen Seitenwänden der Kammer umfasst, die einen Raum zum Aufnehmen des oder jedes Klemmsystems definieren.

9. Gehäusesystem nach einem vorhergehenden Anspruch, ferner umfassend ein Mittel zum lösbaren Fixieren einer elektrischen Anschlussbaugruppe (21) innerhalb der Kammer.

10. Gehäusesystem nach Anspruch 9, wobei das Fixierungsmittel einen Zapfen (19), der von einer Basiswand (5) der Kammer aufrecht steht, zum Eingreifen in ein komplementäres Loch oder eine komplementäre Aussparung in einer elektrischen Anschlussbaugruppe durch Stecken umfasst.

11. Gehäusesystem nach einem vorhergehenden Anspruch, wobei die Kammer ein Paar Stirnwände aufweist, die jeweils mindestens ein Loch aufweisen, durch das ein Kabel oder Kabel hindurchtreten können, und eine oder mehrere Türen (41) aufweisen, die an den Stirnwänden bereitgestellt sind, um ein selektives Öffnen und Schließen der Stirnwandlöcher (37) zu ermöglichen.

12. Gehäusesystem nach einem vorhergehenden Anspruch, ferner umfassend einen Deckel (72) zum Einschließen des Klemmsystems innerhalb der Kammer.

13. Elektrischer Verbinder, umfassend das Gehäusesystem nach einem vorhergehenden Anspruch und eine elektrische Anschlussbaugruppe, die innerhalb der Kammer montiert ist.

## Revendications

1. Système de boîtier pour un connecteur électrique, comprenant :
une chambre (1) comprenant une paroi de base (5) et deux parois latérales sensiblement opposées et dressées (7, 9) ; et
au moins un système de serrage de câble (50), l'au moins un système de serrage (50) étant agencé pour fonctionner sélectivement dans des première et seconde positions, le ou chaque système de serrage (50) comprenant des premier et second éléments (53, 59, 61) agencé pour définir une ouverture (68) ou un évidement à travers lequel au moins un câble peut passer, le premier élément portant un ensemble de dents d'encliquetage (57) et le second élément possédant une surface de mise en prise (67) destinée à une mise en prise avec les dents d'encliquetage (57), dans la première position, ledit second élément (59, 61) pouvant être déplacé par rapport au premier élément (53) afin que la surface de mise en prise (67) puisse se mettre en prise avec des dents successives des dents (57) dans uniquement une direction pour réduire la taille de l'ouverture (68) ou de l'évidement, et dans la seconde position, ledit second élément (59, 61) étant autorisé à se déplacer dans la direction inverse pour permettre l'ouverture de l'ouverture (68) ou de l'évidement, ledit ou chaque système de serrage (50) pouvant être inséré dans le boîtier entre les deux parois latérales (7, 9) moment auquel les premier et second éléments (53, 59, 61) sont empêchés par les parois latérales de s'écarter l'un de l'autre (7, 9) ;
et le ou chaque système de serrage (50) étant détachable de la chambre (1) moment auquel lesdits premier et second éléments (53, 59, 61) peuvent être écartés l'un de l'autre ;
**caractérisé en ce que** le premier élément (53) du ou de chaque système de serrage (50) porte un ensemble de dents d'encliquetage (57) sur des côtés opposés, et un second élément (59, 61) étant prévu de chaque côté du premier élément (53) pour définir deux évidements de câble qui, lors de l'utilisation, peuvent être réduits en taille indépendamment l'un de l'autre.

2. Système de boîtier selon la revendication 1, ledit au moins un système de serrage comprenant un élément de base (51) entre les premier et second éléments, le premier élément étant dressé à partir dudit élément de base et portant l'ensemble de dents d'encliquetage sur une paroi latérale de celui-ci, et le second élément étant espacé du premier élément le long de l'élément de base et s'étendant vers le haut et au-dessus de l'élément de base vers le premier élément.

3. Système de boîtier selon la revendication 2, ledit second élément comprenant une partie verticale (60) qui, lors de l'utilisation, vient en butée contre une paroi latérale de la chambre, et une partie vers l'intérieur (70) qui s'étend à partir de la partie verticale vers l'intérieur sur l'élément de base et vers le premier élément.

4. Système de boîtier selon la revendication 3, ladite partie vers l'intérieur étant reliée à la partie verticale par une partie flexible (65).

5. Système de boîtier selon une quelconque revendication précédente, ledit au moins un système de serrage étant formé d'un moulage monobloc.

6. Système de boîtier selon une quelconque revendication précédente, de tels premier et second systèmes de serrage séparés étant prévus pour être placés à l'intérieur de la chambre, de chaque côté d'un ensemble de bornes, ou d'un montage pour celles-ci, et des ouvertures respectives adjacentes prévues pour l'entrée de câble.

7. Système de boîtier selon une quelconque revendication précédente, ladite chambre comprenant au moins un moyen de positionnement (45) destiné à retenir à l'aide d'un ajustement par friction l'au moins un système de serrage à l'intérieur de la ou des ouverture(s) adjacente(s) à la chambre prévue(s) pour l'entrée de câble entre les parois latérales dressées de la chambre.

8. Système de boîtier selon la revendication 7, ledit ou chaque moyen de positionnement comprenant une paire de nervures opposées (47) sur les parois latérales respectives de la chambre définissant un espace destiné à recevoir le ou chaque système de serrage.

9. Système de boîtier selon une quelconque revendication précédente, comprenant en outre un moyen destiné à fixer de manière amovible un ensemble de bornes électriques (21) à l'intérieur de la chambre.

10. Système de boîtier selon la revendication 9, ledit moyen de fixation comprenant une cheville (19) dressée à partir d'une paroi de base (5) de la chambre pour se mettre en prise dans une ouverture ou un évidement complémentaire dans un ensemble de bornes électriques par emboîtement.

11. Système de boîtier selon une quelconque revendication précédente, ladite chambre possédant une paire de parois d'extrémité possédant chacune au moins une ouverture à travers laquelle un câble ou des câbles peuvent passer, et possédant une ou plusieurs portes (41) prévues au niveau des parois d'extrémité pour permettre l'ouverture et la fermeture sélectives des ouvertures de paroi d'extrémité (37).

12. Système de boîtier selon une quelconque revendication précédente, comprenant en outre un couvercle (72) destiné à enfermer le système de serrage à l'intérieur de la chambre.

13. Connecteur électrique comprenant le système de boîtier selon une quelconque revendication précédente, et un ensemble de bornes électriques montées à l'intérieur de la chambre.
